Europäisches Patentamt

**European Patent Office**

**Office européen des brevets**

(19)

(11) Numéro de publication: **0 090 705**
**B1**

(12) **FASCICULE DE BREVET EUROPÉEN**

(45) Date de publication du fascicule du brevet:
14.01.87

(51) Int. Cl.⁴: **H 04 B 7/185**

(21) Numéro de dépôt: **83400538.1**

(22) Date de dépôt: **15.03.83**

(54) **Système de télécommunications par satellite.**

(30) Priorité: 26.03.82 FR 8205246

(43) Date de publication de la demande:
05.10.83 Bulletin 83/40

(45) Mention de la délivrance du brevet:
14.01.87 Bulletin 87/3

(84) Etats contractants désignés:
BE DE IT

(56) Documents cité:
CONFERENCE PROCEEDINGS, 6th EUROPEAN
MICROWAVE CONFERENCE, 14-17 septembre 1976,
Rome, pages 480-486, Microwave Exhibitions and
Publishers Ltd., Sevenoaks, Kent, GB, B.G. EVANS
et al.: "Single channel per carrier satellite
communication systems"

(73) Titulaire: THOMSON- CSF, 173, Boulevard
Haussmann, F-75379 Paris Cedex 08 (FR)

(72) Inventeur: Luginbuhl, Pierre, THOMSON- CSF SCPI
173, Bld. Haussmann, F-75379 Paris Cedex 08 (FR)
Inventeur: Parniere, Alain, THOMSON- CSF SCPI
173, Bld. Haussmann, F-75379 Paris Cedex 08 (FR)
Inventeur: Argintaru, Lazare, THOMSON- CSF SCPI
173, Bld. Haussmann, F-75379 Paris Cedex 08 (FR)

(74) Mandataire: Weinmiller, Jürgen, Lennéstrasse 9,
D-8133 Feldafing (DE)

## Description

La présente invention concerne un système de télécommunications par satellite.

Dans un système de télécommunications par satellite, un ensemble de stations terriennes échangent des informations entre elles par l'intermédiaire d'un satellite. Chacune de ces stations émet des informations par modulation d'une fréquence porteuse propre à cette station. Lorsque dans une première station on désire se mettre à l'écoute d'une seconde station, on doit préalablement positionner les équipements de réception de la première station sur la fréquence porteuse appropriée. Cette fréquence porteuse est déterminée en ajoutant à la fréquence porteuse sur laquelle on émet la seconde station, le décalage fréquentiel dû au transit, par le satellite, de l'onde émise par la seconde station. Ce décalage fréquentiel est rendu nécessaire par le fait qu'un satellite, comportant des composants actifs, ne peut recevoir et réémettre sur la même fréquence.

Comme il est très difficile de disposer d'une fréquence de référence stable à l'intérieur d'un satellite, ce décalage de fréquence se fait avec une certaine imprécision, ou dérive, par rapport à une valeur théorique. Cette dérive varie par ailleurs dans le temps, notamment suivant les conditions d'orientation du satellite dans l'espace.

Pour assurer une bonne réception des informations émises par les differentes stations, il est donc nécessaire que les équipements de réception de chaque station soient capables de se caler à chaque instant sur la fréquence réelle, et non théorique, de réémission par le satellite des différentes fréquences porteuses, c'est-à-dire de connaître à chaque instant la dérive du satellite.

Pour cela il est connu de munir les équipements de réception des différentes stations d'un système de contrôle automatique de fréquence (CAF). Mais le contrôle automatique de fréquence ne peut être utilisé dans les systèmes de télécommunications par satellite, tels que le système SCPC (abréviation de l'appelation anglaise Single Channel Per Carrier) où la porteuse n'est pas émise constamment, mais seulement en présence d'informations à émettre.

Dans ces systèmes, il est connu d'utiliser une station particulière, appelée station centrale, qui comporte un oscillateur parfaitement stable, appelé pilote de référence, et qui émet une fréquence de référence reçue par toutes les autres stations, dites stations périphériques. Les stations périphériques sont également munies d'oscillateurs parfaitement stables, et sont donc en mesure de déterminer à chaque instant la dérive du satellite, et par là même de se caler automatiquement sur la fréquence réelle de réémission, par le satellite, des différentes fréquences porteuses.

Un tel système est décrit dans le document "Conference Proceedings, 6th European Microwave Conference", 14 bis 17 septembre 1976, pages 480 bis 486.

Ces systèmes de télécommunications présentent l'inconvénient de nécessiter la présence d'oscillateurs parfaitement stables, donc très coûteux, dans toutes les stations.

La présente invention a pour objet un système de télécommunications par satellite ne nécessitant qu'un seul oscillateur parfaitement stable, situé dans la station centrale, moyennant une simple modification des équipements d'émission et de réception des stations centrale et périphériques.

Selon l'invention, un système de télécommunications par satellite, dans lequel des stations périphériques communiquent entre elles, via un satellite, par modulation de porteuses propres à chaque station périphérique et dans lequel une station centrale émet, via le satellite, une fréquence de référence vers les stations périphériques, le transit par le satellite s'accompagnant d'un décalage de fréquence $\Delta F$ fixé et d'une dérive $\delta F$ variable dans le temps des fréquences réémises par le satellite, est caractérisé en ce que la station centrale comporte des moyens pour asservir la fréquence de référence à une valeur telle que la fréquence correspondante réémise par le satellite soit parfaitement stable dans le temps; ces moyens pour asservir la fréquence de référence comportant des moyens pour évaluer la dérive instantanée $\delta F$ du satellite et pour moduler la fréquence de référence avec la dérive instantanée $\delta F$ ainsi évaluée; chaque station périphérique comportant des moyens pour démoduler la dérive instantanée $\delta F$ du satellite et pour retrancher algébriquement avant émission, la dérive instantanée $\delta F$ du satellite ainsi démodulée à la fréquence porteuse propre à cette station périphérique.

Les objets et caractéristiques de la présente invention apparaîtront plus clairement à la lecture de la description suivante d'un exemple de réalisation, ladite description étant faite en relation avec les dessins ci-annexés dans lesquels:

- la figure 1 représente schématiquement un système de télécommunications par satellite conforme à l'invention
- la figure 2 est un schéma d'un exemple de réalisation de la station centrale d'un système de télécommunications par satellite conforme à l'invention.
- la figure 3, est un schéma d'un exemple de réalisation des stations périphériques d'un système de télécommunications par satellite conforme à l'invention.

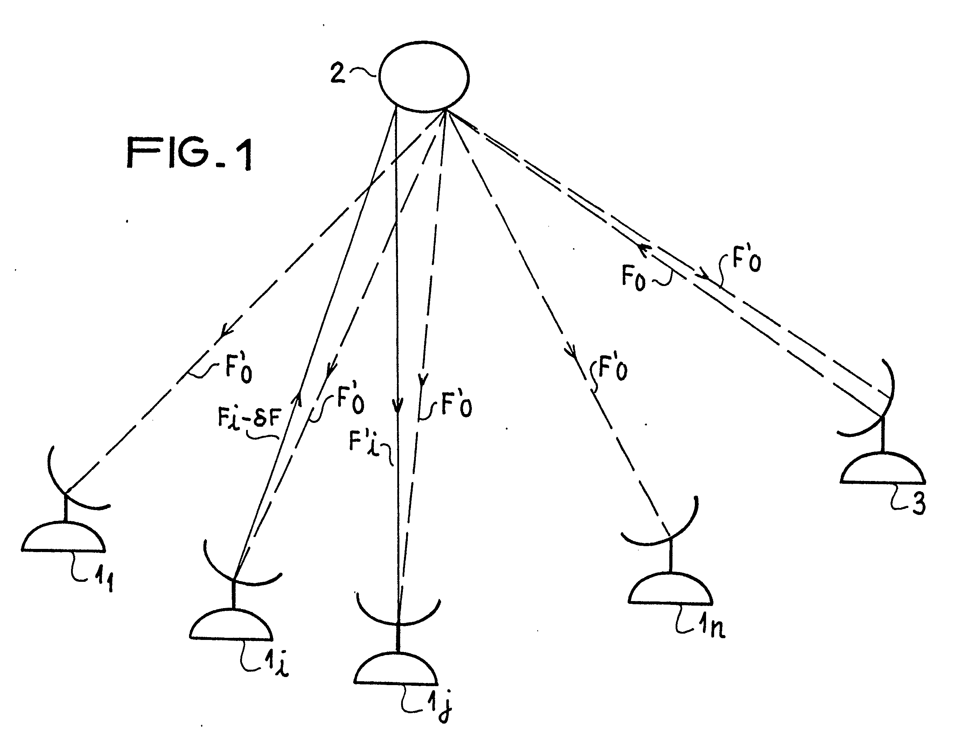

Le système de télécommunications par satellite représenté très schématiquement sur la figure 1 comporte n stations périphériques $1_1$ à $1_n$ qui communiquent entre elles par l'intermédiaire d'un satellite 2.

Chaque station périphérique $1_i$ (avec i variable de 1 à n) émet des informations vers le satellite 2 par modulation d'une porteuse de fréquence $F_i$, et le satellite réémet ces informations vers l'ensemble des stations sur une fréquence porteuse $F'_i + \delta F$ où $F'_i - F_i$ représente le décalage fréquentiel $\Delta F$ apporté par le satellite 2 et $\delta F$ représente la dérive instantanée de ce satellite.

Les stations périphériques qui souhaitent se mettre à l'écoute de la station 1; doivent préalablement régler leurs équipements de réception sur la fréquence $F'_i + \delta F$, et pour cela avoir connaissance de la dérive instantanée $\delta F$ du satellite (le décalage fréquentiel $\Delta F$ étant une valeur fixe définissant le satellite).

A cette fin, il est prévu une station centrale 3, munie d'un pilote de référence parfaitement stable.

Cette station centrale émet une fréquence de référence $F_0$ qui est réémise par le satellite 2, avec un décalage fréquentiel $\Delta F$ et une dérive instantanée $\delta F$, vers l'ensemble des stations, et notamment vers la station centrale 3.

Conformément à l'invention, la station centrale 3 comporte des moyens pour asservir la fréquence de référence $F_0$ à une valeur telle que la fréquence correspondante $F'_0$ réémise par le satellite soit parfaitement stable dans le temps, c'est-à-dire ne soit pas entachée de dérive. Contrairement à ce qui était le cas auparavant, ce n'est donc pas la fréquence de référence $F_0$ émise par la station centrale 3 qui est parfaitement stable dans le temps, mais la fréquence correspondante $F'_0$ réémise par le satellite. Les stations périphériques recevant du satellite une fréquence $F'_0$ parfaitement stable dans le temps, il n'est plus nécessaire de les équiper d'oscillateurs parfaitement stables.

Cependant, la seule réception de la fréquence $F'_0$ par les stations périphériques ne leur suffit pas pour avoir connaissance de la dérive instantanée $\delta F$ du satellite. C'est pourquoi, conformément à l'invention, la station centrale 3 comporte également des moyens pour évaluer la dérive instantanée $\delta F$ du satellite 2 et pour moduler la porteuse $F_0$ émise par la station centrale 3 avec l'information $\delta F$. Corrélativement, les stations périphériques $1_1$ à $1_n$ comportent des moyens pour démoduler l'information $\delta F$ reçue sur la porteuse $F'_0$ réémise par le satellite 2 en réponse à la porteuse $F_0$ reçue.

Lors du transit par le satellite 2 de la fréquence porteuse $F_i$ émise par la station périphérique $I_i$, une dérive instantanée $\delta F$ s'ajoute algébriquement à la fréquence correspondante théorique $F'_i$ (égale à $F_i + \Delta F$) émise en retour par le satellite 2.

Conformément à l'invention, chaque station périphérique $1_1$ comporte également des moyens pour retrancher algébriquement, avant émission, la dérive instantanée $\delta F$ démodulée à la fréquence porteuse $F_i$ attribuée à cette station. Ainsi, après transit par le satellite 2, les autres stations périphériques reçoivent les informations émises par celle-ci sur la fréquence porteuse théorique $F'_i$ non entachée de dérive.

Sur la figure 1, on a représenté en traits pointillés les trajets empruntés par les ondes émises de la station centrale 3 vers l'ensemble des stations périphériques $1_1$ à $1_n$ et centrale 3. En traits pleins on a représenté le trajet emprunté par les ondes émises d'une station périphérique $1_i$ par exemple vers une autre station périphérique $I_j$. Sur chacun de ces trajets on a mentionné la fréquence porteuse utilisée.

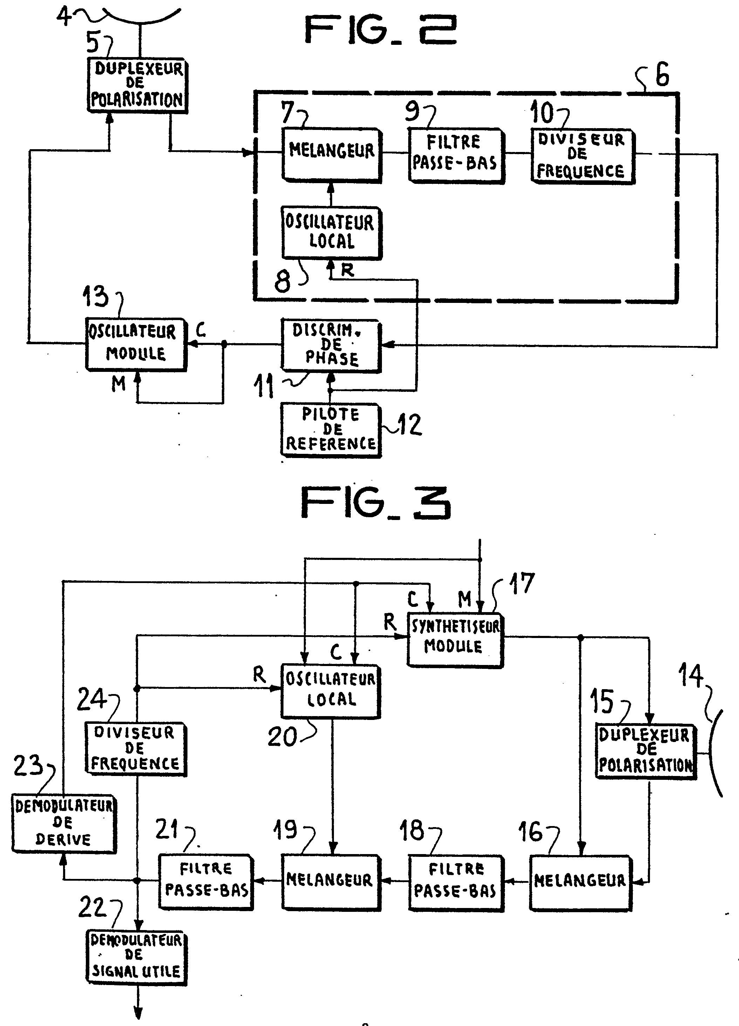

Sur la figure 2 on a représenté schématiquement un exemple de réalisation de la station centrale.

La station centrale comporte un aérien 4 qui, à travers un duplexeur de polarisation 5, reçoit le signal à émettre vers le satellite et délivre le signal reçu du satellite.

La station centrale comporte également un étage de transposition de fréquence 6 destiné à transposer la fréquence reçue du satellite (de l'ordre de quelques Gigahertz) dans une bande de fréquences plus faibles (par exemple de l'ordre de quelques Megahertz).

L'étage de transposition de fréquence 6 comporte un mélangeur 7 qui reçoit d'une part le signal fourni par le duplexeur de polarisation 5, d'autre part le signal fourni par un oscillateur local 8. L'étage de transposition de fréquence 6 comporte également un filtre passe-bas 9 qui reçoit le signal de sortie du mélangeur 7 et un diviseur de fréquence 10 qui reçoit le signal de sortie du filtre passe-bas 9. La sortie du diviseur de fréquence 10 constitue la sortie de l'étage de transposition de fréquence 6.

La station centrale comporte également un discriminateur de phase 11 qui reçoit d'une part le signal de sortie de l'étage de transposition de fréquence 6, d'autre part le signal fourni par un pilote de référence 12.

La station centrale comporte enfin un oscillateur modulé 13, muni d'une entrée de commande C et d'une entrée de modulation M reliées à la sortie du discriminateur de phase 11. L'oscillateur modulé 13 fournit au duplexeur de polarisation 5 le signal à émettre vers le satellite.

L'oscillateur local 8 est muni d'une entrée de référence R reliée à la sortie du pilote de référence 12.

Pour définir les notions d'entrée de référence et d'entrée de commande d'un oscillateur, on rappelle qu'un oscillateur local, ou un synthétiseur, est essentiellement constitué par une boucle à verrouillage de phase qui comporte un comparateur muni d'une première entrée recevant une fréquence de référence, un oscillateur contrôlé en tension muni d'une entrée reliée à la sortie du comparateur, et un diviseur à rang variable muni d'une entrée reliée à la sortie de l'oscillateur contrôlé en tension, d'une sortie reliée à une deuxième entrée du comparateur, et d'une entrée de réglage. On entend par entrée de commande d'un oscillateur local ou d'un synthétiseur l'entrée de réglage du diviseur à rang variable et par entrée de référence la première entrée du comparateur.

Dans le cas d'une modulation numérique, on interposerait un convertisseur analogique numérique entre la sortie du discriminateur de phase 11 et l'entrée de modulation de l'oscillateur modulé 13.

La station centrale représentée sur la figure 2 fonctionne de la façon suivante.

On désigne par $F_R$ la fréquence fournie par le pilote de référence 12 et par $F_T$ la fréquence obtenue en sortie de l'étage de transposition de fréquence 6.

La fréquence $F_R$ est parfaitement stable dans le temps. En revanche, en l'absence d'asservissement de la fréquence émise par la station centrale 3, la fréquence reçue du satellite par la station centrale 3 n'est pas parfaitement stable dans le temps. La précision de la fréquence $F_T$ obtenue en sortie de l'étage de transposition de fréquence est celle de la fréquence reçue du satellite divisée par le rang de division du diviseur de fréquence.

La fréquence $F_R$ est choisie égale à la fréquence qui serait obtenue en sortie de l'étage de transposition de fréquence 6 si la fréquence présente à l'entrée de cet étage de transposition de fréquence était la fréquence parfaitement stable $F'_o$.

Lorsque le système est verrouillé, en sortie du discriminateur de phase 11, on obtient un signal représentant l'erreur de phase entre le signal réellement reçu du satellite et l'horloge de référence. Ce signal est appliqué à l'entrée de commande de l'oscillateur modulé 13 afin de maintenir la fréquence de la porteuse émise par cet oscillateur de manière à ce que la fréquence porteuse réémise par le satellite soit égale à la fréquence parfaitement stable $F'_o$, auquel cas l'écart obtenu en sortie du discriminateur de phase 11 est minimal.

Le signal obtenu en sortie du discriminateur de phase 11 est représentatif de la dérive instantanée $\delta F$ du satellite. C'est pourquoi il est utilisé pour moduler la porteuse émise par l'oscillateur 13, de manière à informer les stations périphériques de cette dérive.

Un exemple de réalisation d'une station périphérique est maintenant décrit en relation avec la figure 3.

La station périphérique comporte un aérien 14 qui, à travers un duplexeur de polarisation 15, reçoit le signal à émettre vers le satellite et délivre le signal reçu du satellite.

La station périphérique comporte également un étage de transposition de fréquence dans lequel deux transpositions de fréquence sont effectuées successivement. Une première transposition de fréquence est effectuée au moyen d'un mélangeur 16 qui reçoit d'une part le signal fourni par le duplexeur de polarisation 15, d'autre part le signal fourni par un synthétiseur de fréquence modulé 17, également utilisé pour l'émission comme on le verra ultérieurement. Le mélangeur 16 est suivi d'un filtre passe-bas 18. Une deuxième transposition de fréquence est effectuée au moyen d'un mélangeur 19 qui reçoit d'une part le signal fourni par le filtre passe-bas 18, d'autre part le signal fourni par un oscillateur local 20. Le mélangeur 19 est suivi d'un filtre passe-bas 21.

La station périphérique comporte également un démodulateur 22, appelé démodulateur de signal utile, connecté en sortie du filtre passe-bas 21, et destiné à restituer les informations utiles reçues d'une autre station périphérique et transmises par modulation de la fréquence porteuse attribuée à cette station.

La station périphérique comporte également un démodulateur 23, appelé démodulateur de dérive, connecté en sortie du filtre passe-bas 21, et destiné à restituer l'information de dérive du satellite, transmise par modulation de la fréquence porteuse émise par la station centrale. Le signal de sortie du démodulateur 23 est appliqué à l'entrée de commande C du synthétiseur modulé 17 et de l'oscillateur local 20.

Par ailleurs, le signal fourni par le filtre passe-bas 21 est appliqué, via un diviseur de fréquence 24, à l'entrée de référence R de l'oscillateur local 20 et du synthétiseur modulé 17.

Les informations utiles à émettre par la station périphérique sont appliquées à l'entrée de modulation M du synthétiseur modulé 17.

De plus, le synthétiseur modulé 17 étant également utilisé comme oscillateur local pour la première transposition de fréquence, les informations utiles appliquées à l'entrée de modulation du synthétiseur modulé 17 sont également appliquées à l'oscillateur local 20 utilisé pour la deuxième transposition de fréquence de manière à assurer un effet anti-local, c'est-à-dire éviter le retour des informations émises.

La station périphérique représentée sur la figure 3 fonctionne de la façon suivante.

La fréquence porteuse $F'_o$ parfaitement stable émise par le satellite en réponse à la fréquence porteuse émise par la station centrale, et modulée avec l'information de dérive du satellite, est appliquée, après transposition de fréquence, à l'entrée de référence R du synthétiseur modulé 17 et de l'oscillateur local 20. Les fréquences générées dans la station périphérique sont donc parfaitement stables, bien que cette station périphérique ne dispose d'aucun pilote de référence.

L'information de dérive du satellite, obtenue en sortie du démodulateur 23, est appliquée à l'entrée de commande C du synthétiseur modulé 17 pour y être retranchée (en valeur algébrique) à la fréquence porteuse attribuée à cette station périphérique.

Cette même dérive étant ensuite ajoutée (en valeur algébrique) à cette fréquence porteuse lors du transit par le satellite, c'est la fréquence porteuse décalée par le satellite, mais non entachée de dérive, qui est reçue par les différentes stations périphériques.

Il suffit donc de régler les équipements de réception de chaque station périphérique sur les fréquences porteuses théoriques réémises par le satellite pour assurer une bonne réception des informations émises par les autres stations péripheriques.

Afin de maintenir le caractére parfaitement stable (par référence à la fréquence reçue du satellite) des fréquences générées dans la station périphérique, il est nécessaire d'ajouter algébriquement la dérive instantanée $\delta F$ à la fréquence générée par l'oscillateur local 20. C'est pourquoi l'information de dérive fournie par le démodulateur 23 est également appliquée à l'entrée de commande C de l'oscillateur local 20.

**Revendications**

1/ Système de télécommunications par satellite, dans lequel des stations périphériques $(1_i)$ communiquent entre elles, via un satellite (2), par modulation de porteuses $(F_i)$ propres à chaque station périphérique $(1_i)$ et dans lequel une station centrale (3) émet, via le satellite (2), une fréquence de référence $(F_0)$ vers les stations périphériques $(1_i)$, le transit par le satellite (2) s'accompagnant d'un décalage de fréquence $\Delta F$ fixé et d'une dérive $\delta F$ variable dans le temps des fréquences réémises par le satellite (2), caractérisé en ce que la station centrale (3) comporte des moyens (6, 11, 12, 13) pour asservir la fréquence de référence $(F_0)$ à une valeur telle que la fréquence correspondante $(F'_0)$ réémise par le satellite (2) soit parfaitement stable dans le temps ces moyens pour asservir la fréquence de référence $(F_0)$ comportant des moyens pour évaluer la dérive instantanée $\delta F$ du satellite (2) et pour moduler la fréquence de référence $(F_0)$ avec la dérive instantanée $\delta F$ ainsi évaluée; chaque station périphérique $(1_i)$ comportant des moyens pour démoduler la dérive instantanée $\delta F$ du satellite (2) et pour retrancher algébriquement avant émission, la dérive instantanée $\delta F$ du satellite ainsi démodulée à la fréquence porteuse $(F_i)$ propre à cette station périphérique $(1_i)$.

2/ Système selon la revendication 1, caractérisé en ce que les moyens pour asservir la fréquence de référence émise par la station centrale (3) comportent un oscillateur (13) à fréquence commandable ayant une entrée de commande reliée à la sortie d'un discriminateur de phase (11) qui reçoit d'une part une fréquence parfaitement stable fournie par un oscillateur pilote de référence (12), d'autre part la fréquence $(F'_0)$ réémise par le satellite (2) en réponse à la fréquence de référence $(F_0)$ émise par la station centrale (3) et transposée au moyen d'un étage de transposition de fréquence (6).

3/ Système selon la revendication 2, caractérisé en ce que l'étage de transposition de fréquence (6) comporte un mélangeur (7) qui reçoit d'une part le signal fourni par un duplexeur de polarisation (5), d'autre part le signal fourni par un oscillateur local (8) muni d'une entrée de référence (R) reliée à la sortie du pilote de référence (12); un filtre passe-bas (9) qui reçoit le signal de sortie du mélangeur (7); et un diviseur de fréquence (10) qui reçoit le signal de sortie du filtre passe-bas (9), la sortie de ce diviseur de fréquence constituant la sortie de l'étage de transposition de fréquence (6).

4/ Système selon la revendication 2, caractérisé en ce qu'un convertisseur analogique numérique est interposé entre la sortie du discriminateur de phase (11) et l'entrée de modulation de l'oscillateur (13).

5/ Système selon la revendication 1, dans lequel chaque station périphérique $(1_i)$ comporte un synthétiseur de fréquence (17) pour l'émission et la réception, associé pour la réception à un étage de transposition de fréquence (16, 18, 19, 20, 21), ce synthétiseur de fréquence (17) ayant une entrée de commande (C), caractérisé en ce que les moyens pour retrancher algébriquement avant émission, la dérive instantanée $\delta F$ du satellite à la fréquence porteuse $(F_i)$ attribuée à la station périphérique $(1_i)$ comportent un démodulateur de dérive (23) dont l'entrée est connectée à la sortie de l'étage de transposition de fréquence (16, 17, 18, 19, 20, 21) et dont la sortie est reliée à l'entrée de commande du synthétiseur de fréquence (17).

6/ Système selon la revendication 5, caractérisé en ce que l'étage de transposition de fréquence comporte un premier mélangeur (16), qui reçoit d'une part le signal fourni par un duplexeur de polarisation (15), d'autre part le signal fourni par le synthétiseur de fréquence modulé (17), un premier filtre passe-bas (18) qui suit ce mélangeur (16), un second mélangeur (19) qui reçoit d'une part le signal fourni par le premier filtre passe-bas (18), d'autre part le signal fourni par un oscillateur local (20); un second filtre passe-bas (21) qui suit le second mélangeur (19), le signal de sortie de ce second filtre passe-bas (21) étant appliqué via un diviseur de fréquence (24) à l'entrée de référence (R) de l'oscillateur local (20) et du synthétiseur modulé (17).

7/ Système selon la revendication 6, caractérisé en ce qu'il comprend un démodulateur de signal utile (22), connecté en sortie du second filtre passe-bas (21).

8/ Système selon l'une quelconque des revendications 5 à 7, dans lequel deux transpositions de fréquence successives sont effectuées dans l'étage de transposition de fréquence de chaque station périphérique, et dans lequel le synthétiseur de fréquence (17) utilisé à l'émission sert aussi d'oscillateur local pour l'une de ces transpositions, caractérisé en ce que l'étage de transposition, comportant l'oscillateur local (20) qui a une entrée de commande, la sortie du démodulateur de dérive (23) est également reliée à cette entrée de commande de l'oscillateur local utilisé pour l'autre transposition de fréquence.

9/ Système selon la revendication 8, caractérisé en ce que le synthétiseur de fréquence (17) et l'oscillateur (20) ont des entrées de référence reliées à la sortie de l'étage de transposition de fréquence (16, 18, 19, 20, 21) de chaque station périphérique (1ᵢ).

**Patentansprüche**

1. Satelliten-Fernmeldesystem, in dem Peripherstationen (1ᵢ) untereinander über einen Satelliten (2) aufgrund einer Modulation mit jeder Peripherstation eigentümlichen Trägern ($F_i$) verkehren und in dem eine Zentralstation (3) über den Satelliten (2) eine Bezugsfrequenz ($F_o$) an die Peripherstationen (1ᵢ) sendet, wobei im Übergang über den Satelliten (2) eine feste Frequenzverschiebung $\Delta F$ und eine zeitlich variable Abweichung $\delta F$ der vom Satelliten (2) wieder ausgesandten Frequenzen erfolgt, dadurch gekennzeichnet, daß die Zentralstation (3) Mittel (6, 11, 12, 13) aufweist, mit denen die Bezugsfrequenz ($F_o$) auf einen solchen Wert eingeregelt wird, daß die entsprechende vom Satelliten (2) wieder ausgesandte Frequenz ($F'_o$) zeitlich vollkommen stabil ist, wobei diese Mittel zur Regelung der Bezugsfrequenz ($F_o$) Mittel enthalten, um die augenblickliche Abweichung $\delta F$ des Satelliten (2) zu ermitteln und um die Bezugsfrequenz ($F_o$) mit der so ermittelten augenblicklichen Abweichung $\delta F$ zu modulieren, und daß jede Peripherstation (1ᵢ) Mittel zur Demodulation der augenblicklichen Abweichung $\delta F$ des Satelliten (2) und zur algebraischen Subtraktion der augenblicklichen Abweichung $\delta F$ des Satellitensignals von der für diese Peripherstation (1ᵢ) eigentümlichen Trägerfrequenz ($F_i$) vorgesehen sind.

2. System nach Anspruch 1, dadurch gekennzeichnet, daß die Mittel zur Regelung der von der Zentralstation (3) ausgesandten Bezugsfrequenz einen in seiner Frequenz steuerbaren Oszillator (13) aufweisen, dessen Steuereingang an den Ausgang eines Phasendiskriminators (11) angeschlossen ist, welcher einerseits eine vollkommen stabile, von einem Bezugspilotoszillator (12) gelieferte Frequenz und andererseits die Frequenz ($F'_o$) zugeführt erhält, die vom Satelliten (2) als Antwort auf die von der Zentralstation (3) ausgesandte Bezugsfrequenz ($F_o$) ausgesandt und mithilfe einer Frequenzumsetzerstufe (6) umgesetzt wird.

3. System nach Anspruch 2, dadurch gekennzeichnet, daß die Frequenzumsetzerstufe (6) einen Mischer (7), der einerseits das von einem Polarisationsduplexer (5) gelieferte Signal und andererseits das von einem örtlichen Oszillator (8) gelieferte Signal zugeführt erhält, der einen mit dem Ausgang des Bezugspilotoszillators (12) verbundenen Bezugseingang (R) besitzt, ein Tiefpassfilter (9), das das Ausgangssignal des Mischers (7) zugeführt erhält, und einen Frequenzteiler (10) aufweist, der das Ausgangssignal des Tiefpassfilters (9) zugeführt erhält, wobei der Ausgang dieses Frequenzteilers den Ausgang der Frequenzumsetzerstufe (6) bildet.

4. System nach Anspruch 2, dadurch gekennzeichnet, daß ein Analog-Digital-Wandler zwischen den Ausgang des Phasendiskriminators (11) und den Modulationseingang des Oszillators (13) eingefügt ist.

5. System nach Anspruch 1, in dem jede Peripherstation (1ᵢ) einen Frequenzsynthetisierer (17) für Sendung und Empfang aufweist, der für den Empfang einer Frequenzumsetzerstufe (16, 18, 19, 20, 21) zugeordnet ist und einen Steuereingang (C) besitzt, dadurch gekennzeichnet, daß die Mittel zum algebraischen Subtrahieren der augenblicklichen Abweichung $\delta F$ des Satelliten von der der Peripherstation (1ᵢ) zugewiesenen Trägerfrequenz ($F_i$) einen Abweichungsdemodulator (23) enthalten, dessen Eingang an den Ausgang der Frequenzumsetzerstufe (16, 17, 18, 19, 20, 21) angeschlossen ist und dessen Ausgang mit dem Steuereingang des Frequenzsynthetisierers (17) verbunden ist.

6. System nach Anspruch 5, dadurch gekennzeichnet, daß die Frequenzumsetzerstufe einen ersten Mischer (16), der einerseits das von einem Polarisationsduplexer (15) gelieferte Signal und andererseits das vom modulierten Frequenzsynthetisierer (17) gelieferte Signal zugeführt erhält, ein erstes Tiefpassfilter (18), das auf diesen Mischer (16) folgt, einen zweiten Mischer (19), der einerseits das vom ersten Tiefpassfilter (18) gelieferte Signal und andererseits das von einem lokalen Oszillator (20) gelieferte Signal zugeführt erhält, und ein zweites Tiefpassfilter (21) aufweist, das auf den zweiten Mischer (19) folgt, wobei das Ausgangssignal dieses zweiten Tiefpassfilters (21) über einen Frequenzteiler (24) an den Bezugseingang (R) des örtlichen Oszillators (20) und des modulierten Synthetisierers (17) angelegt ist.

7. System nach Anspruch 6, dadurch gekennzeichnet, daß es einen Nutzsignaldemodulator (22) aufweist, der an den Ausgang des zweiten Tiefpassfilters (21) angeschlossen ist.

8. System nach einem beliebigen der Ansprüche 5 bis 7, in dem zwei Frequenzumsetzungen nacheinander in der Frequenzumsetzerstufe jeder Peripherstation durchgeführt werden und in dem der beim Senden verwendete Frequenzsynthetisierer (17) zugleich als örtlicher Oszillator für eine dieser Umsetzungen dient, dadurch gekennzeichnet, daß die Umsetzerstufe den örtlichen Oszillator (20), der einen Steuereingang besitzt, enthält, und daß der Ausgang des Abweichungsdemodulators (23) ebenfalls an diesen Steuereingang des örtlichen Oszillators angeschlossen ist, der für die andere Frequenzumsetzung verwendet wird.

9. System nach Anspruch 8, dadurch gekennzeichnet, daß der Frequenzsynthetisierer (17) und der Oszillator (20) mit ihren Bezugseingängen an den Ausgang der Frequenzumsetzerstufe (16, 18, 19, 20, 21) jeder

Peripherstation ($1_i$) angeschlossen sind.

**Claims**

1. A satellite telecommunications system in which peripheral stations ($1_i$) intercommunicate via a satellite (2) by means of a modulation of carriers ($F_i$) which are individually allocated to each peripheral station ($1_i$), and in which a central station (3) transmits via the satellite (2) a reference frequency ($F_o$) to the peripheral stations ($1_i$), the transit via the satellite (2) being accompanied by a constant frequency shift $\Delta F$ and a drift $\delta F$ variable in time of the frequencies which are retransmitted by the satellite (2), characterized in that the central station (3) comprises means (6, 11, 12, 13) for adjusting the reference frequency ($F_o$) to such a value that the corresponding frequency ($F'_o$) which is retransmitted by the satellite (2) is perfectly stable in time, these means for adjusting the reference frequency ($F_o$) comprising means for computing the instantaneous drift $\delta F$ of the satellite (2) and for modulating the reference frequency ($F_o$) with the computed instantaneous drift $\delta F$, each peripheral station ($1_i$) comprising means for demodulating the instantaneous drift $\delta F$ of the satellite (2) and for algebraically subtracting prior to the transmission, the demodulated instantaneous drift $\delta F$ of the satellite signal from the carrier frequency ($F_i$) individually allocated to that peripheral station ($1_i$).

2. A system according to claim 1, characterized in that the means for adjusting the reference frequency transmitted by the central station (3) include an oscillator (13), the frequency of which is controllable and the control input of which is connected to the output of a phase discriminator (11) receiving on the one hand a perfectly stable frequency supplied by a reference pilot oscillator (12) and on the other hand the frequency ($F'_o$) retransmitted by the satellite (2) in reply to the reference frequency ($F_o$) transmitted by the central station (3) and transposed by means of a frequency transposition stage (6).

3. A system according to claim 2, characterized in that the frequency transposition stage (6) comprises a mixer (7) receiving on the one hand the signal supplied by a polarisation duplexer (5) and on the other hand the signal supplied by a local oscillator (8) having a reference input (R) which is connected to the output of the reference pilot oscillator (12), a low pass filter (9) receiving the output signal of the mixer (7), and a frequency divider (10) receiving the output signal from the low pass filter (9), the output of this frequency divider constituting the output of the frequency transposition stage (6).

4. A system according to claim 2, characterized in that an analog-digital converter is inserted between the output of the phase discriminator (11) and the modulation input of the oscillator (13).

5. A system according to claim 1, in which each peripheral station ($1_i$) comprises a frequency syntheziser (17) for transmission and/or reception, said syntheziser being associated for reception to a frequency transposition stage (16, 18, 19, 20, 21) and having a control input (C), characterized in that the means for algebraically subtracting, prior to the transmission, the instantaneous drift $\delta F$ of the satellite from the carrier frequency ($F_i$) allocated to the peripheral station ($1_i$) comprise a drift demodulator (23) the input of which is connected to the output of the frequency transposition stage (16, 17, 18, 19, 20, 21) and the output of which is connected to the control input of the frequency syntheziser (17).

6. A system according to claim 5, characterized in that the frequency transposition stage comprises a first mixer (16) receiving on the one hand the signal supplied by a polarisation duplexer (15) and on the other hand the signal supplied by the modulated frequency syntheziser (17), a first low pass filter (18) following the mixer (16), a second mixer (19) receiving on the one hand the signal supplied by the first low pass filter (18) and on the other hand the signal supplied by a local oscillator (20), a second low pass filter (21) following the second mixer (19), the output signal of this second low pass filter (21) being applied via a frequency divider (24) to the reference input (R) of the local oscillator (20) and of the modulated syntheziser (17).

7. A system according to claim 6, characterized in that it comprises a demodulator for demodulating the useful signal (22) connected to the output of the second low pass filter (21).

8. A system according to any one of claims 5 to 7, in which two successive frequency transpositions are performed in the frequency transposition stage of each peripheral station and in which the frequency syntheziser (17) used for transmission is also used as local oscillator for one of these transpositions, characterized in that, the transposition stage comprising the local oscillator (20) having a control input, the output of the drift demodulator (23) is also connected to this control input of the local oscillator used for the other frequency transposition.

9. A system according to claim 8, characterized in that the frequency syntheziser (17) and the oscillator (20) are provided with reference inputs connected to the output of the frequency transposition stage (16, 18, 19, 20, 21) of each peripheral station ($1_i$).

FIG.1

$2$

$F'_0$

$F_0$

$F'_0$

$F_i - \delta F$

$F'_0$

$F'_0$

$F'_i$

$F'_0$

$1_1$

$1_i$

$1_j$

$1_n$

$3$

0 090 705

0 090 705

# FIG. 2

| | |
|---|---|
| 4 | |
| 5 | DUPLEXEUR DE POLARISATION |
| 6 | |
| 7 | MELANGEUR |
| 9 | FILTRE PASSE-BAS |
| 10 | DIVISEUR DE FREQUENCE |
| 8 | OSCILLATEUR LOCAL |
| 13 | OSCILLATEUR MODULE |
| 11 | DISCRIM. DE PHASE |
| 12 | PILOTE DE REFERENCE |

# FIG. 3

| | |
|---|---|
| 17 | SYNTHETISEUR MODULE |
| 20 | OSCILLATEUR LOCAL |
| 14 | |
| 15 | DUPLEXEUR DE POLARISATION |
| 24 | DIVISEUR DE FREQUENCE |
| 23 | DEMODULATEUR DE DERIVE |
| 21 | FILTRE PASSE-BAS |
| 19 | MELANGEUR |
| 18 | FILTRE PASSE-BAS |
| 16 | MELANGEUR |
| 22 | DEMODULATEUR DE SIGNAL UTILE |

3